# EUROPEAN PATENT APPLICATION

(11) **EP 4 516 490 A1**
(43) Date of publication of application: **05.03.2025**
(21) Application number: 24197734.7
(22) Date of filing: 30.08.2024
(51) Int. Cl.: B29C 70/30, B29C 70/38

(54) **MAXIMIZING THE LAMINATE QUALITY AND STRENGTH OF CURVED COMPOSITE STRUCTURAL COMPONENTS MANUFACTURED WITH AUTOMATED FIBER PLACEMENT (AFP) TECHNOLOGIES**

(30) Priority: 01.09.2023 US 202318460468
(71) Applicant: Spirit AeroSystems, Inc., Wichita, KS 67210 (US)
(72) Inventor: MCDERMOTT, Patrick, 67210 Wichita (US); ULLRICH, Daniel, 67210 Wichita (US)
(74) Representative: HGF

(57) **Abstract**

Methods and systems for forming a composite part. The methods include providing a layup model and characterizing the specific overlap ratio (SOR) in discretized sections of the layup model. The layup model can be modified until an acceptable range of SOR values is achieved along the length of the part. Once an acceptable range of SOR values is achieved, the resulting production model is used to produce the part, for example, using an automated fiber placement (AFP) process.

## Description

### BACKGROUND

Multiple industry effects-of-defects resources document reductions in strength of composite structure due to cross-sectional ply undulations caused by a variety of quality anomalies. Through-the-thickness accumulation of tow overlaps or gaps in curved automated fiber placement (AFP) composite parts can result in cross-sectional ply undulations with similar morphology and/or result in localized areas of reduced strength. Previous attempts to characterize the accumulation of gaps and overlaps were visual judgements, rather than an objective, analytical approach. Those endeavors aimed to determine if the accumulation of gaps/overlaps was acceptable or not (i.e., Pass/Fail).

Therefore, there is a need for a system and method for optimization of laminate quality of curved composite structural components that does not suffer from these and other deficiencies of the prior art.

### SUMMARY

A method for forming a composite part in accordance with an embodiment of the invention includes rendering a layup model for placing a plurality of plies in an automated fiber placement (AFP) process and placing, via the automated fiber placement (AFP) process, the plurality of plies according to the layup model to thereby form the composite part. The layup model includes a plurality of substantially equidistant sections along a length of the layup model. The plurality of plies is arranged such that each of the substantially equidistant sections has a specific overlap ratio (SOR) within a pre-determined range.

A method for forming a composite part in accordance with another embodiment includes (a) providing a layup model of the composite part for placing a plurality of plies in an automated fiber placement (AFP) process. The method further includes (b) designating a plurality of points along a length of the layup model. The plurality of points define a plurality of substantially equidistant sections therebetween. The method further includes (c) identifying a quantity of overlaps formed by the plurality of plies within each of the plurality of substantially equidistant sections. The method further includes (d) calculating a specific overlap ratio (SOR) within each of the plurality of substantially equidistant sections by dividing the quantity of overlaps within each section by the nominal through-thickness of the composite part within the corresponding section. The method further includes (e) modifying the layup model and repeating steps (b)-(d) until each of the plurality of sections has a SOR within a pre-determined range, thereby producing a production model. The method further includes (f) placing, via the automated fiber placement (AFP) process, the plurality of plies according to the production model to thereby form the composite part.

In yet another embodiment, a system for forming a composite part includes a control system configured to render a layup model for placing a plurality of plies. The layup model includes a plurality of substantially equidistant sections along a length of the layup model. The plurality of plies is arranged such that each of the substantially equidistant sections has a specific overlap ratio (SOR) within a pre-determined range. The system further includes an automated fiber placement (AFP) system configured to place the plurality of plies according to the layup model to thereby form the composite part.

This summary is intended to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in more detail below with reference to the attached drawing figures, wherein:
FIG. 1 is a system for forming a composite part, constructed in accordance with various embodiments of the present invention;
FIG. 2 is a perspective view of an example composite part;
FIG. 3 is a flow diagram illustrating an example method of forming a composite part, in accordance with various embodiments of the present invention;
FIG. 4 is an image showing a CATPart with Part Solid, Neutral Fiber, and Rosette Coordinate System;
FIG. 5 is an image showing VCP Ply Overlaps (0° Overlaps Hidden);
FIG. 6 is an image showing Trimming the Neutral Fiber to the Extents of the Part Solid;
FIG. 7 is an image showing Creating the First Point on the Neutral Fiber;
FIG. 8 is an image showing Part Solid and Neutral Fiber with All Neutral Fiber Points;
FIG. 9 is an image showing Standard Overlap Section Cuts (Flange Cut 2 Not Shown);
FIG. 10 is an image showing Creating Section Cut Curves;
FIG. 11 is an image showing Creating Section Cut Curves via OML Intersect;
FIG. 12 is an image showing Creating Section Cut Surfaces;
FIG. 13 is an image showing Ply Overlap Lines;
FIG. 14 is an image showing Projecting Bucket Points to Web Cut 1;
FIG. 15 is an image showing Translating Bucket Points Along Rosette Z to Flange Cut 1;
FIG. 16 is an image showing Projecting Translated Bucket Points to OML;
FIG. 17 is a table showing Sample Input Point Data for CoreSamplingAutomation; and
FIG. 18 is a pair of histograms showing sample overlap quantity and sample overlap SOR.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The embodiments are intended to describe aspects of the invention in sufficient detail to enable those skilled in the art to practice the invention. Other embodiments can be utilized, and changes can be made without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the present technology can include a variety of combinations and/or integrations of the embodiments described herein.

Embodiments of the present invention are generally directed to systems and methods that maximize laminate quality and strength of curved composite structural components manufactured with Automated Fiber Placement (AFP) technologies. A system for forming a composite part such as a curved composite part described herein may utilize any or all of the process steps described below.

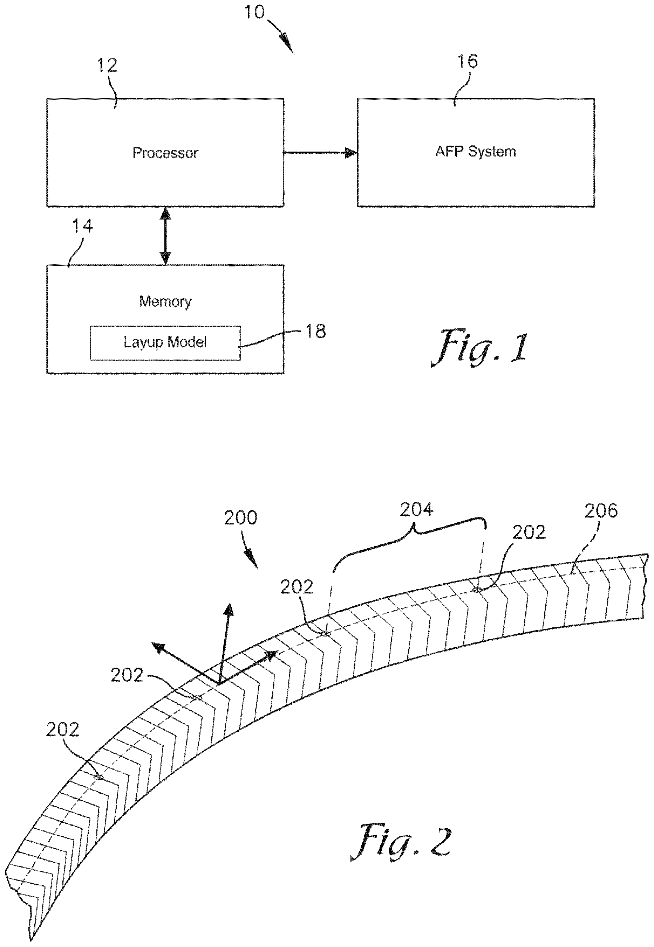

In one or more embodiments, as depicted in FIG. 1, a system 10 for forming a composite part having a specific overlap ratio (SOR) comprises a control system having a processor 12 and a memory 14. For example, the control system may include one or more of a computer, tablet, laptop, server, or other controller configured to render a layup model. The system 10 further comprises an automated fiber placement (AFP) system 16 for carrying out the AFP process. The AFP system 16 is configured to place the plurality of plies according to the layup model to thereby form the composite part.

The processor 12 and/or the memory 14 may be embodied by any one or more electronic devices, such as computer servers, workstation computers, desktop computers, laptop computers, palmtop computers, notebook computers, tablets or tablet computers, smartphones, mobile phones, cellular phones, or the like. Specifically, the processor 12 may comprise one or more processors and may include electronic hardware components such as microprocessors (single-core or multi-core), microcontrollers, digital signal processors (DSPs), field-programmable gate arrays (FPGAs), analog and/or digital application-specific integrated circuits (ASICs), or the like, or combinations thereof. The processor 12 may generally execute, process, or run instructions, code, code segments, code statements, software, firmware, programs, applications, apps, processes, services, daemons, or the like. The processor 12 may also include hardware components such as registers, finite-state machines, sequential and combinational logic, configurable logic blocks, and other electronic circuits that can perform the functions necessary for the operation of the current invention. In certain embodiments, the processor 12 may include multiple computational components and functional blocks that are packaged separately but function as a single unit. In some embodiments, the processor 12 may further include multiprocessor architectures, parallel processor architectures, processor clusters, and the like, which provide high performance computing. The processor 12 may be in electronic communication with the other electronic components through serial or parallel links that include universal busses, address busses, data busses, control lines, and the like. The processor 12 may be operable, configured, or programmed to perform the method steps described later herein by utilizing hardware, software, firmware, or combinations thereof.

The processor 12 may include and/or communicate with other processors, the memory 14, and/or the AFP system 16 via communication elements and/or user interfaces known in the art, such as keyboards, a mouse, a trackball, input ports, wireless communication devices, or the like. Various communication elements may allow the exchange of data with other computing devices, external systems, networks, and the like. The communication element may include signal and/or data transmitting and receiving circuits, such as antennas, amplifiers, filters, mixers, oscillators, digital signal processors (DSPs), and the like. The communication element may establish communication wirelessly by utilizing radio frequency (RF) signals and/or data that comply with communication standards such as cellular 2G, 3G, 4G, Voice over Internet Protocol (VoIP), LTE, Voice over LTE (VoLTE), or 5G, Institute of Electrical and Electronics Engineers (IEEE) 802.11 standard such as WiFi, IEEE 802.16 standard such as WiMAX, Bluetooth^{™}, or combinations thereof. In addition, the communication element may utilize communication standards such as ANT, ANT+, Bluetooth^{™} low energy (BLE), the industrial, scientific, and medical (ISM) band at 2.4 gigahertz (GHz), or the like. Alternatively, or in addition, the communication element may establish communication through connectors or couplers that receive metal conductor wires or cables which are compatible with networking technologies such as ethernet. In certain embodiments, the communication element may also couple with optical fiber cables. The communication element may be in electronic communication with the memory 14, the processor 12, and/or the AFP system 16.

The memory 14 may be embodied by devices or components that store data in general, and digital or binary data in particular, and may include exemplary electronic hardware data storage devices or components such as read-only memory (ROM), programmable ROM, erasable programmable ROM, random-access memory (RAM) such as static RAM (SRAM) or dynamic RAM (DRAM), cache memory, hard disks, floppy disks, optical disks, flash memory, thumb drives, universal serial bus (USB) drives, solid state memory, or the like, or combinations thereof. In some embodiments, the memory 14 may be embedded in, or packaged in the same package as, the processor 12. The memory 14 may include, or may constitute, a non-transitory "computer-readable medium". The memory 14 may store the instructions, code, code statements, code segments, software, firmware, programs, applications, apps, services, daemons, or the like that are executed by the processor 12. The memory 14 may also store data that is received by the processor 12 or the device in which the processor 12 is implemented. The processor 12 may further store data or intermediate results generated during processing, calculations, and/or computations as well as data or final results after processing, calculations, and/or computations. In addition, the memory 14 may store settings, data, documents, layup models, production models, other model files or instructions, photographs, videos, images, databases, and the like.

In one or more embodiments, the AFP system 16 includes a gantry/robotic system having a fiber placement head attached thereto, as well as a fiber placement tool. The AFP head may be operated by the processor or by processors and/or circuitry of the AFP system 16, which may be configured to instruct the gantry/robotic system to lay multiple strips of composite material, or tows, onto the fiber placement tool, which is contoured to the desired shape of the part. Adhesion between the incoming tows and underlying substrate is provided by using appropriate process conditions with respect to heating, compaction, and tensioning. In one or more embodiments, the AFP system 16 includes components configured for providing one or more of the heating, compaction, and tensioning. A series of tows forms a course, and courses are then combined to produce a ply. A stack of multiple plies processed by the AFP system 16 produces a laminate, as depicted in FIG. 2.

Methods for forming a composite part in accordance with embodiments of the present invention generally comprise rendering a layup model 18 for placing a plurality of plies in an automated fiber placement (AFP) process and a placement process, such as steering by an automated fiber placement (AFP) process, that places the plurality of plies. In some embodiments, placement of the plies is managed using computer programming, such as numerically controlled (NC) programming, according to the layup model 18 or a production model generated automatically based on the layup model 18, providing production instructions to the AFP system 16.

In some embodiments, the layup model 18 is provided in a computer or other controller such as the processor 12 and/or its memory 14. The layup model 18 may include NC programming or other computer programming instructions for controlling placement of the plies by the AFP system 16 according to the layup model 18. In some embodiments, the processor 12 and/or its associated memory 14 comprises software, hardware, and/or firmware, which can include one or more processing elements and/or one or more memory elements for utilizing one or more programs and/or data to interpret and modify the layup model 18 and operate the AFP process and/or send the layup model 18 or instructions derived therefrom to the AFP system 16. Exemplary hardware of the AFP system 16 may include one or more electrical circuits and/or one or more programmable control devices that are programmed to control the AFP process via the one or more electrical circuits.

The layup model 18 is provided to the processor 12 and may include placement instructions for placement of the plies, for example, onto a part 200, as depicted in FIG. 2. In some embodiments, the composite part is a curved composite part (i.e., the length dimension of the part has a non-linear center line). In some embodiments, the curved composite part comprises a spar or other aircraft part.

The layup model 18, when displayed graphically on a computer screen or the like associated with the processor 12, may depict a composite part having length, width, and height dimensions, and may also indicate the orientation and placement of fiber plies on the part. In some embodiments, the plurality of plies comprises two or more plies having different orientations. In some embodiments, the two or more plies have orientations that differ by less than 90°, less than 75°, less than 60°, or less than 45°. In some embodiments, the two or more plies have orientations that differ by 15° to 45°, or 20° to 40°.

The methods and systems according to embodiments of the present invention provide for an objective characterization and iterative optimization of through-thickness tow gap and overlap accumulation in curved component models. Embodiments of the present invention therefore overcome the problems with the traditional, subjective, pass/fail approach (low-bar) by providing an objective, analytical, repeatable approach that is suitable for optimization (high-bar).

Embodiments of the present invention utilize the SOR. The SOR represents the number of through thickness overlaps (and gaps) for a given discretized part length divided by the number of local laminate plies. The SOR of each discretized part length is characterized and compared to the other discretized part lengths along the entire length of the part. Layup models having a large variance in SOR values will generally yield unacceptable overlap and/or gap accumulation on the resulting part produced by AFP. Thus, when an unacceptably large variance in SOR is characterized, the NC programming course start locations are modified (iteratively) until the SOR variance is minimized to an acceptable range, thereby reducing through thickness gap/overlap accumulation and associated ply undulations in the resulting part. Therefore, some embodiments of the present invention comprise characterizing the SOR variance, and if necessary, modifying the layup model 18 to achieve an acceptable SOR variance.

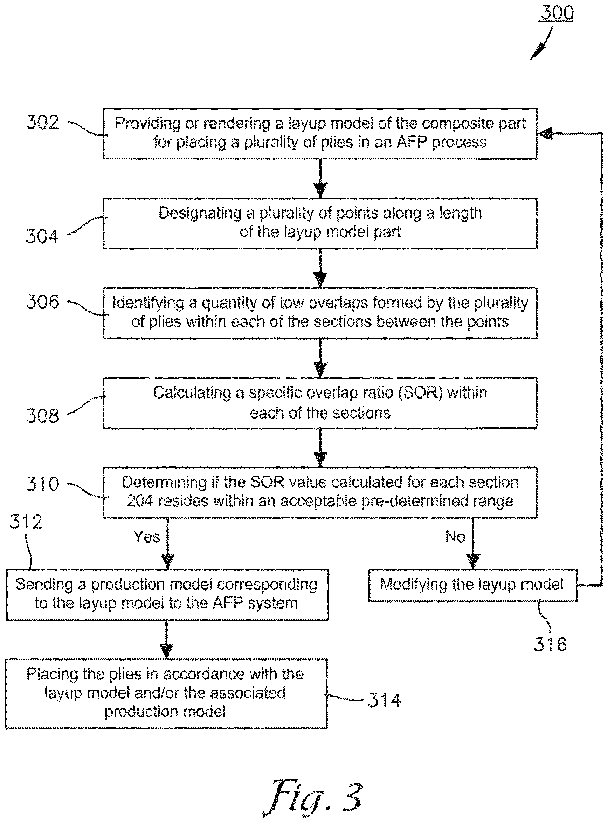

The flow chart of FIG. 3 depicts in more detail the steps of an exemplary method 300 for forming a composite part according to one or more embodiments of the present invention. In some embodiments of the invention, various steps may be omitted and/or steps may occur out of the order depicted in FIG. 3 without departing from the scope of the invention. For example, two blocks shown in succession in FIG. 3 may in fact be executed substantially concurrently, or blocks may sometimes be executed in the reverse order depending upon the functionality involved. The steps may be performed by the processor 12 of the system 10 and/or the AFP system 16 via hardware, software, firmware, or combinations thereof. Furthermore, the steps may be implemented as instructions, code, code segments, code statements, a program, an application, an app, a process, a service, a daemon, or the like, and may be stored on a computer-readable storage medium, such as the memory 14.

In one or more embodiments, the method 300 includes providing or rendering a layup model (e.g., the layup model 18) of the composite part for placing a plurality of plies in an AFP process, as depicted in block 302, and designating a plurality of points along a length of the layup model part, as depicted in block 304. Block 304 may be part of a SOR variance characterization process. As shown in FIG. 2, in some embodiments, a plurality of points 202 define a plurality of substantially equidistant sections 204 between each point along a length of the part 200. In some embodiments, the plurality of points 202 reside on a center line 206, which may be curved (non-linear) on the curved part 200. The distance between the points can be selected depending on the length of the part and the overall thickness of the layers of plies. In some embodiments, the distance between the points 202 is 10 mm to 100 mm, or 20 mm to 50 mm.

Once the plurality of points 202 are designated as depicted in block 304, the method 300 further comprises identifying a quantity of tow overlaps formed by the plurality of plies within each of the sections 204 between the points 202, as depicted in block 306. The quantity of overlaps can be identified using a variety of methods. For example, in some embodiments, a program can be run on the processor 12 or other controller that displays or otherwise identifies points of tow overlaps. In some embodiments, the tow overlaps are identified by user inputs to the processor 12. In some embodiments, the identifying step 306 comprises generating one or more planes perpendicular to a surface of the layup model part 200 and quantifying intersections of the one or more planes and the plurality of plies.

Once the plurality of points 202 are designated and the tow overlaps are identified, the method 300 further comprises calculating a specific overlap ratio (SOR) within each of the sections 204, as depicted in block 308. The SOR is calculated by dividing the quantity of overlaps 202 within each section 204 by the nominal through-thickness of the composite part within the corresponding section 204. The nominal through-thickness refers to the distance between the bottom surface of the first ply layer placed by the placement process and the top surface of the last ply layer placed by the placement process.

Next, the method 300 may include a step of determining if the SOR value calculated for each section 204 resides within an acceptable pre-determined range, as depicted in block 310. If the SOR value calculated for each section 204 resides within an acceptable pre-determined range, then the process or the method 300 will proceed to the steps of sending a production model corresponding to the layup model 18 to the AFP system 16, as depicted in block 312, and/or placing the plies in accordance with the layup model 18 and/or the associated production model, as depicted in block 314. In some embodiments, the pre-determined range comprises SOR values within +/- 50%, within +/-40%, within +/- 30%, within +/- 20%, or within +/- 10% of a mean of the SOR for all of the substantially equidistant sections 204. In some embodiments, the pre-determined range comprises SOR values less than 2.0, less than 1.9, less than 1.8, less than 1.7, less than 1.6, or less than 1.5. In some embodiments, the pre-determined range comprises SOR values of 1.2 to 1.9, 1.20 to 1.82, 1.200 to 1.815, or 1.4 to 1.6.

However, if the SOR value calculated for each section 204 does not reside within an acceptable pre-determined range, then this indicates an unacceptable variance (and potential part weakness or defect). In such cases, the method 300 may proceed to the steps of modifying the layup model 18, as depicted in block 316, and then repeating the steps of blocks 302 - 310 until the SOR value calculated for each section 204 resides within an acceptable pre-determined range, thereby indicating an acceptable layup model has been found for producing a production model and/or part with the desired characteristics. In some embodiments, such modifications in block 316 comprise changing one or more of tow spacing, course spacing, the quantity of tows in a given course, course steering, tow overlap distance, or translating the position of a sequence (e.g., along an axis 90 degrees to its orientation).

As noted above, in certain embodiments, the placement process comprises an automated fiber placement (AFP) process. The resulting composite part will therefore have the same properties (e.g., ply orientation, tow spacing, etc.) as the production model based on the layup model 18 having an acceptable SOR variance.

Although the invention has been described with reference to example embodiments illustrated in the attached drawing figures, it is noted that equivalents may be employed, and substitutions made herein without departing from the scope of the invention as described and claimed herein.

For instance, it should be noted that composite parts are typically formed from composite material, as is known in the art, which generally includes at least two constituent components-a reinforcement material and a matrix material. The reinforcement material generally provides mechanical strengthening properties, such as high tensile strength, to the composite material, while the matrix material acts as a binder to hold the reinforcement material together. The reinforcement material and the matrix material may possess additional properties not discussed herein. Furthermore, the composite material may include additional components not discussed herein.

### EXAMPLE

An exemplary process for characterizing the specific overlap ratio (SOR) variance of a layup model is described in this example. It should be understood, however, that this process is provided as an example only and is not limiting on the overall scope of the invention.

In order to ensure that production parts do not have an excessive number of ply overlaps spaced closely together, which can create undulations that have a detrimental effect on part strength, a process for characterizing the overlap quantity (QTY) and SOR variance is performed. The QTY and SOR variance can be presented in histogram charts for visual comparison. These charts illustrate where in a part the overlaps are concentrated and ensure that the concentration of overlaps in production parts is not excessive and does not exceed that seen in mechanically tested specimens.

An overview of how to create these histograms is presented below:
1. Create a single CATPart (or some other CAD model) with both the part solid and ply overlaps.
2. Define "buckets" by creating points spaced 20mm apart along the neutral fiber - each line on the histogram charts depends on the number of overlaps in a given 20mm bucket.
3. Define the desired flange and web cuts as surfaces in the CATPart.
4. Intersect the ply overlaps with the desired cut to create overlap lines.
5. Use the Knowledge Based Engineering (KBE) app "PointUtility" to extract the location of each of these overlap lines.
6. Use the KBE apps (e.g., "PointUtility" and "CoreSamplingAutomation") to find the part thickness at each bucket point X coordinate at the desired cuts.
7. Compile each overlap into a bucket in Excel and use this overlap count per bucket data to create Overlap QTY histograms.
8. Divide the overlap counts by the part thickness at the bucket to create SOR histograms.

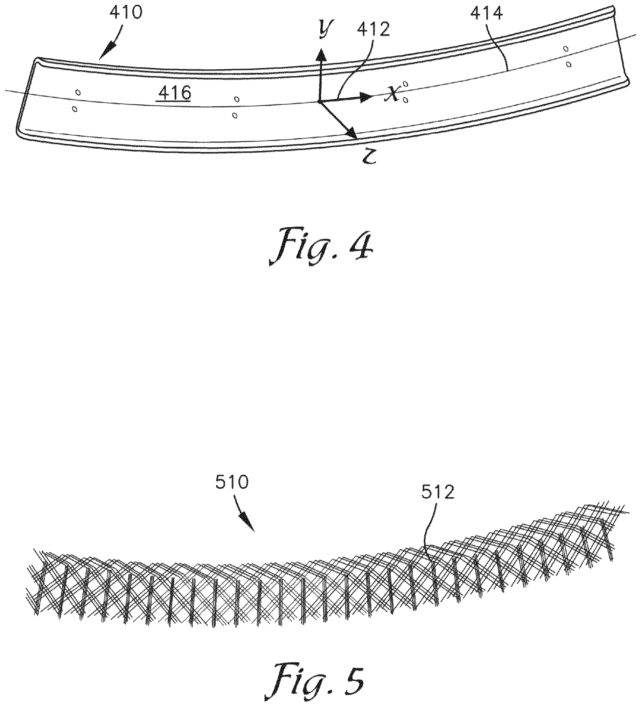

To create these histograms, the following inputs are needed:
- A CATPart 410 of the composite part in question, including a solid of the part, and a rectangular local coordinate system 412 (e.g., "rosette" coordinate system) at the center of the part oriented along the neutral fiber 414, as depicted in FIG. 4. The model should also include the composite stacking (not shown) and a surface 416 representing the part outer mold line (OML).
- A model 510 of the ply overlaps as predicted by numerical control (NC) programming is depicted in FIG. 5. Typically, numerical control (NC) data is delivered as a set of CATParts, each containing tow surfaces, course center lines 512, and overlap surfaces for a single ply. The overlap surfaces will need to be copied into the same CATPart as the part solid, and it is convenient to import it in such a way that each ply is in its own Geometrical Set, with each geometrical set name containing the ply orientation, so that plies may be hidden based on orientation as needed. Thus, create and name a geometrical set in the part solid CATPart for each ply, then open each VCP CATPart and copy the overlap surfaces (typically with "Lap" in the name of the surface) into its respective geometrical set.

- Access to the KBE apps "PointUtility" and "CoreSampling Automation".

### Detailed Characterization Process

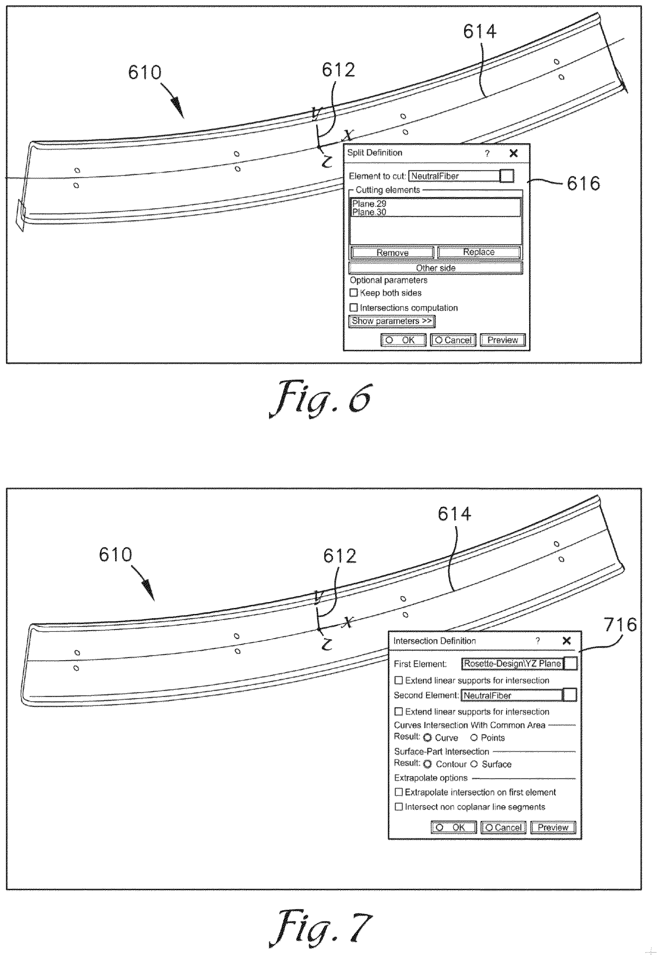

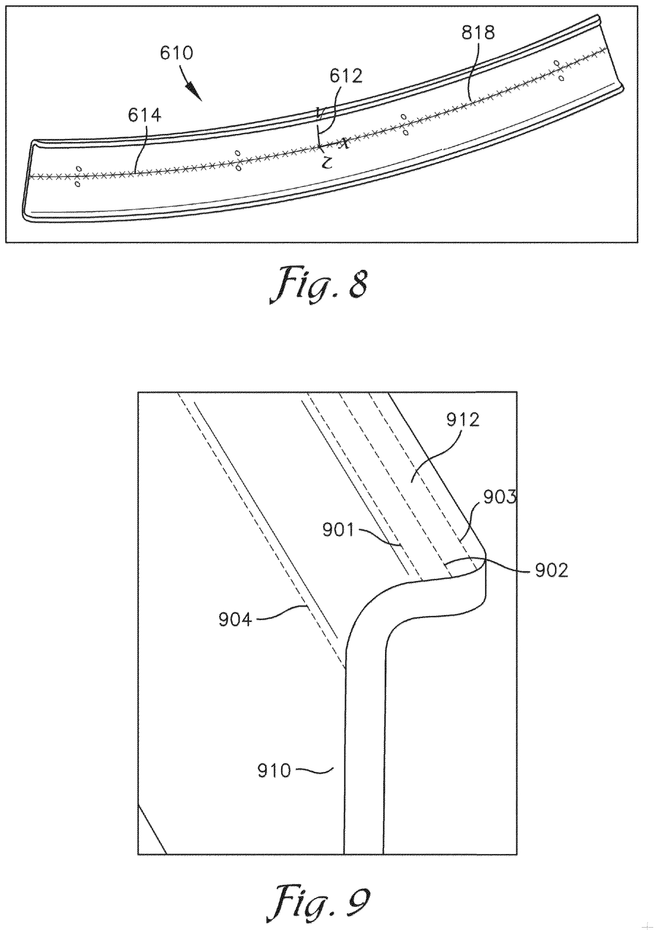

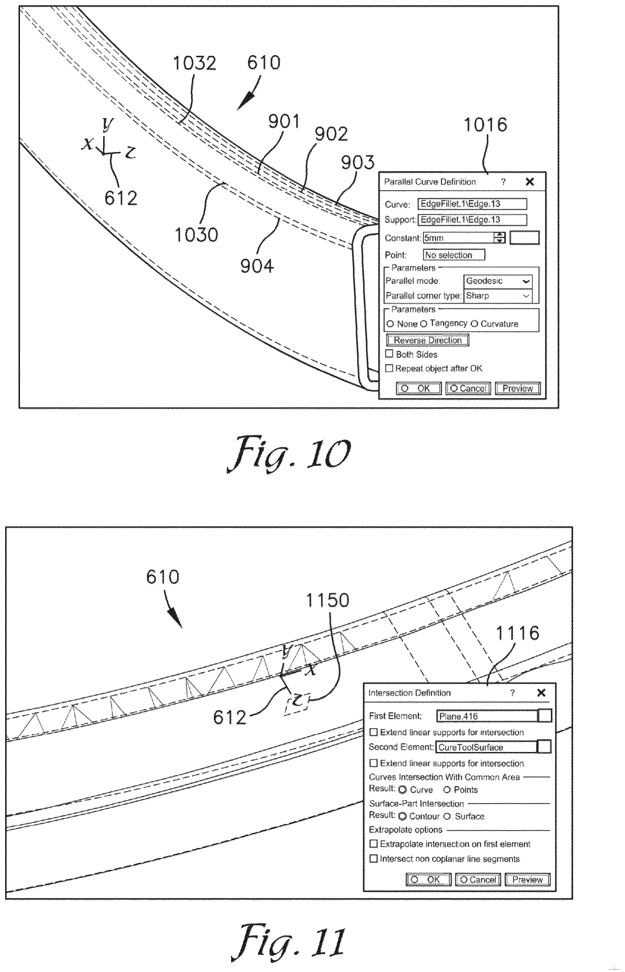

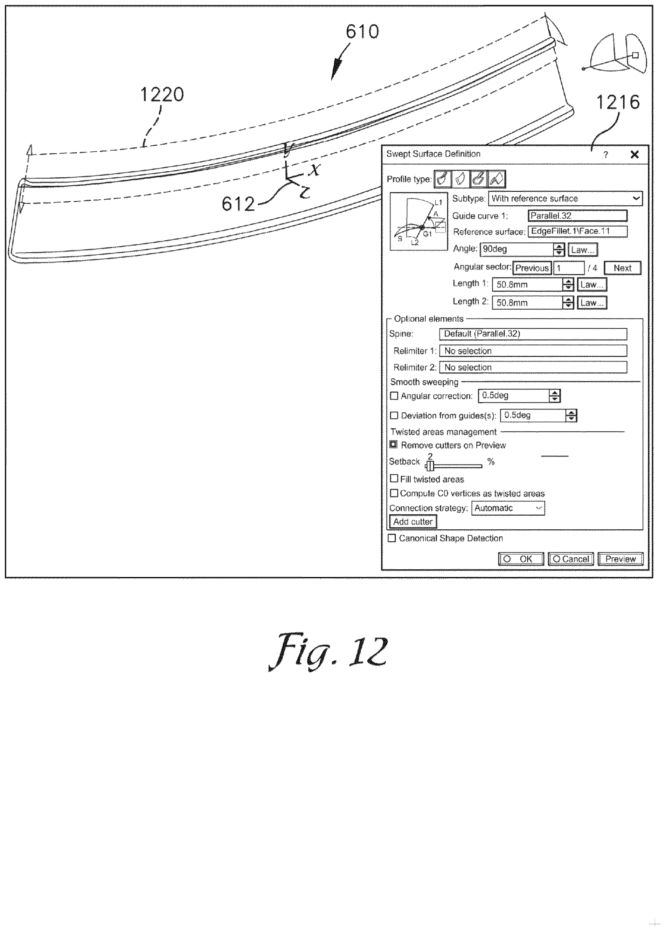

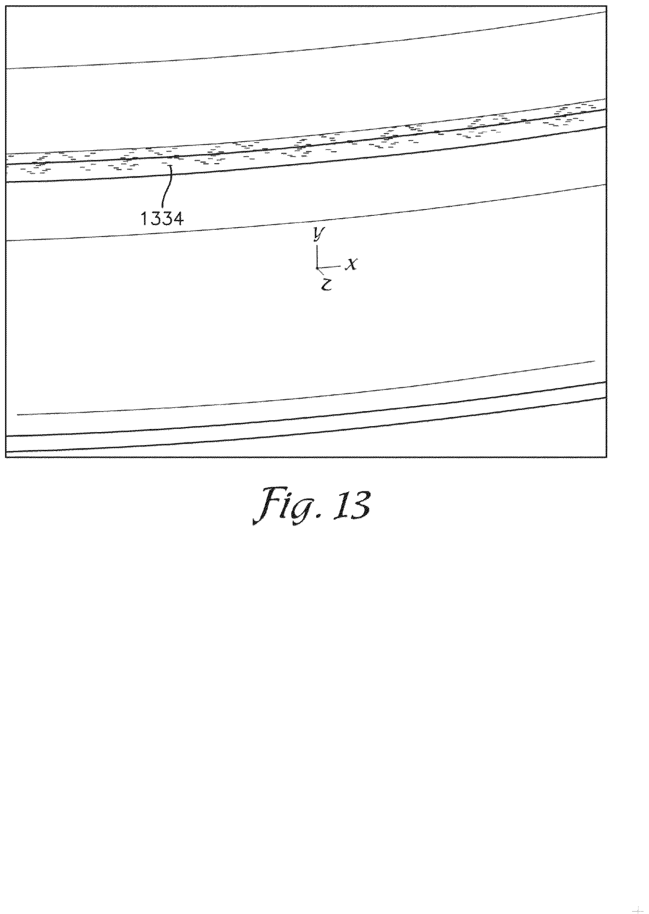

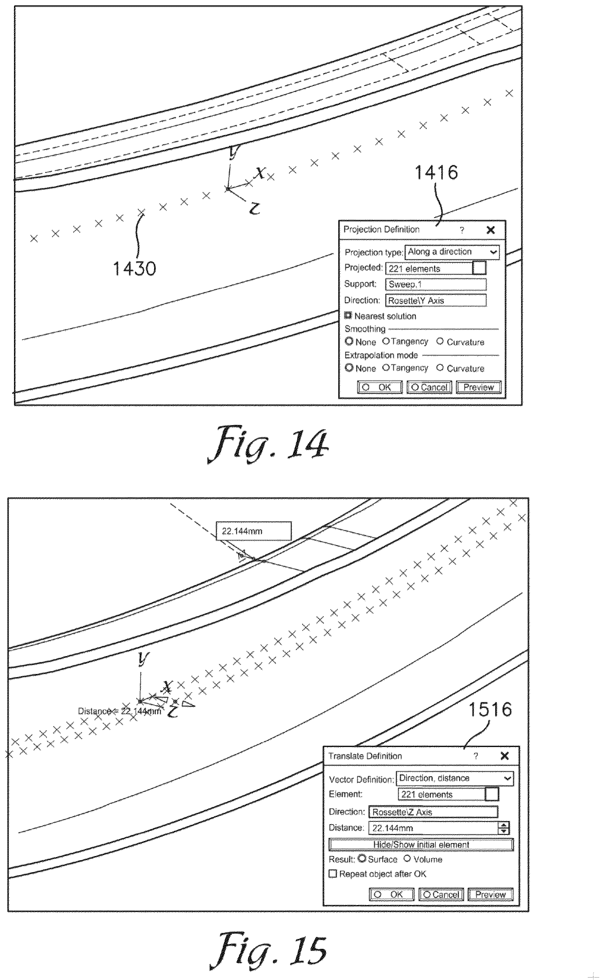

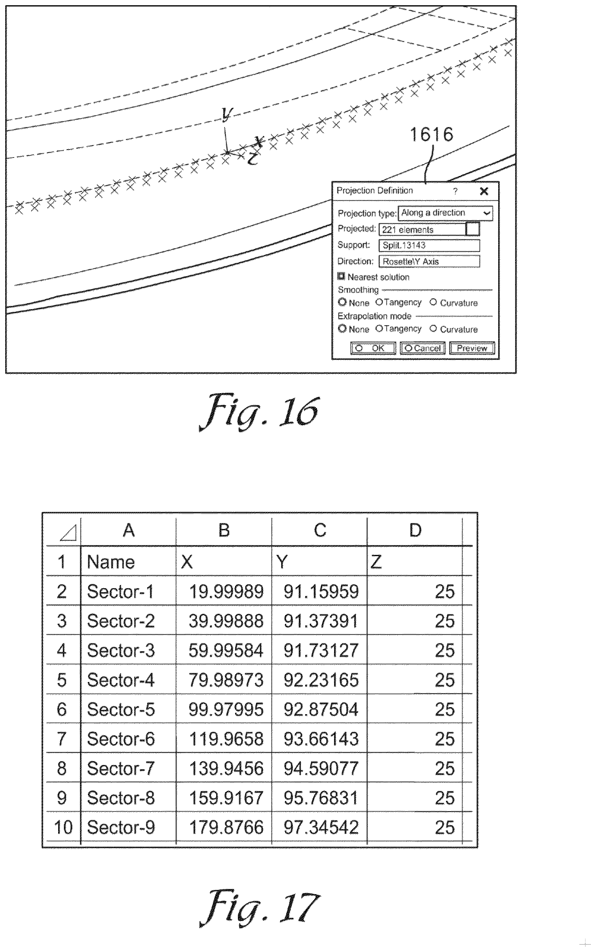

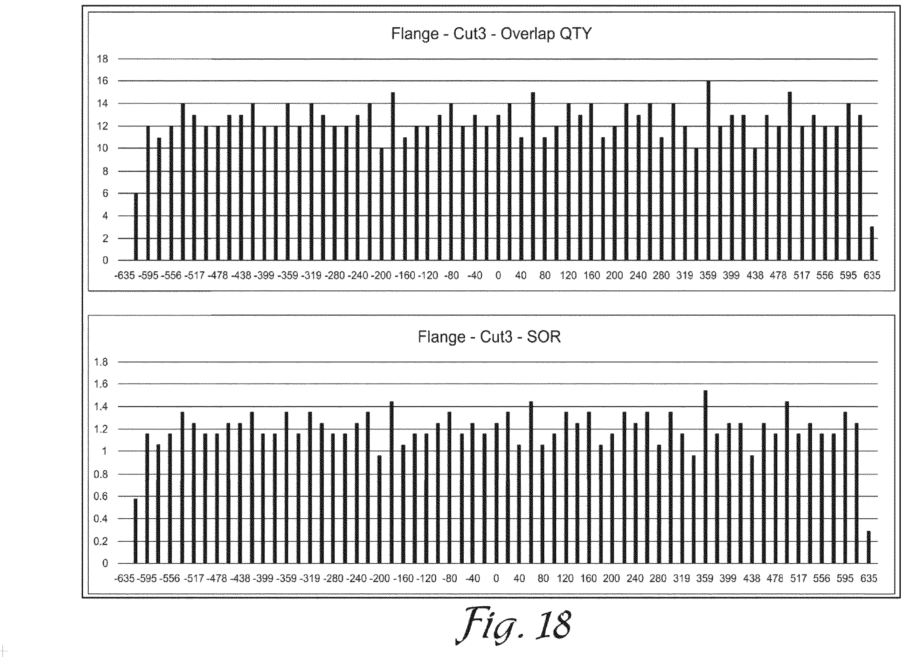

1. Once a CATPart 610 with the required part and ply overlap geometry is created, create a set of points on a neutral fiber 614 spaced 20mm apart, beginning with a point at a rosette coordinate system 612. Since there is no need to have buckets beyond the bounds of the trimmed part, start by creating a copy of the neutral fiber curve that is trimmed to the boundaries of the part, such as by a user providing various inputs via a "Split Definition" pop-up screen 616, as depicted in the screen shot in FIG. 6. Then, create the first point by intersecting the neutral fiber 614 with the YZ plane of the rosette CS, such as by a user providing various inputs via an "Intersection Definition" pop-up screen 716, as depicted in the screen shot in FIG. 7. Lastly, use a Points Repetition tool twice or more to repeat such points 818 along the trimmed neutral fiber 614 every 20mm in both directions, as depicted in the screen shot in FIG. 8.
2. Create curves on the part body at desired cut locations on the part(including web 910 and flange 912). Due to the curvature of the part, the maximum number of overlaps tends to be near an inner one of the flanges of the modeled part. Also, more than one cut at the inner flange is typically required, because as you translate a cut section forward and aft, overlaps in 45° and 135° plies will translate along the length of the frame, potentially resulting in different overlap counts or SORs. Based on this, the following cuts are used, as depicted in FIG. 9:
   - Flange Cut 1 (labeled 901): A curve on the inner flange parallel to and spaced 2.5mm from the inner flange radius tangency.
   - Flange Cut 2 (labeled 902): A curve on the inner flange parallel to the inner flange radius tangency, centered between Flange Cut 1 and Flange Cut 3.
   - Flange Cut 3 (labeled 903): A curve on the inner flange parallel to the inner flange radius tangency and spaced 5mm from the free edge of the inner flange at the inner flange's widest point.
   - Web Cut 1 (labeled 904): A curve on the web parallel to and spaced 5mm from the inboard web radius tangency.
   Each of these curves can be created by using a Parallel function on radius tangency 1030 (or inner radius tangency 1032) as depicted in FIG. 10, using the inner flange or web surface as a support. For complex geometry, right-clicking the Curve and Support boxes will allow a user to Create Multiple Extract, allowing the user to select multiple curves or surfaces at once, such as by a user providing various inputs via a "Parallel Curve Definition" pop-up screen 1016, as in the screen shot depicted in FIG. 10. In some cases, particularly on the inner flange where the geometry is complex or the cut section is out of the bounds of the trimmed part geometry, it may be easier to define a plane 1150 at the desired cut section and to Intersect this plane and the OML surface to create the section cut curve, such as by a user providing various inputs via an "Intersection Definition" pop-up screen 1116, as in the screen shot depicted in FIG. 11.
3. Create overlap lines at each of these cuts by creating surfaces at each of these cuts and intersecting them with the overlap surfaces. A surface 1220 perpendicular to the part surface can be created using a Sweep function. The length of the sweep should be such that the new surface intersects with all overlaps at the flange or web, without extending into another flange. This can be accomplished by a user providing various inputs via a "Swept Surface Definition" pop-up screen 1216, as in the screen shot depicted in FIG. 12.
4. Use Show/Hide to show overlaps for 45°, 90°, and 135° plies only. 0° plies are excluded as these overlaps are parallel to the cut sections, so any 0° overlap line would not be easy to locate, as it would extend the length of the cut. This same rule applies in case another cut orientation is used, e.g. for a cut perpendicular to the neutral fiber, 90° ply overlaps should not be shown. Once all of the appropriate overlaps are shown, use the Swap Visible Space tool to ensure that no 45°/90°/135° plies have been hidden. Then, use the Intersect tool to intersect all of the shown overlaps with a section cut surface. Use the multiple select button in order to select all overlaps at once. Although they are hidden, the Intersect tool will not ignore hidden surfaces if selected, so only select the overlaps that are not hidden. If an error message is displayed due to the fact that many of the surfaces will not intersect with the cut section surface at all, delete all errors and proceed. Create intersections between ply overlaps and section cut surfaces for all of the desired cuts. See FIG. 13, which depicts ply overlap lines 1334.
5. Once all overlap lines are created, extract the overlap locations for each cut using the KBE tool "PointUtility". In the first window, change the tab to CATIA, choose the Multi Output in CATIA that contains the overlap lines for the desired cut. Then, change the coordinate units to mm and "Read input points". In the next window, choose EXCEL as the output destination. Transform the points into a selected axis system, and choose the rosette coordinate system in CATIA. Finally, change the output coordinate units to mm, and execute to save the spreadsheet. Repeat this for all desired cuts. Once this is done, the same must be done for the bucket points on the neutral fiber created in step 1. The process is the same as for extracting overlap line locations; the only difference is that care should be taken to select the original point at the origin of the rosette coordinate system as well as both point repetitions.
6. Next, use the KBE apps PointUtility and CoreSamplingAutomation to find the part thickness at each bucket point X location 1430 for the Web Cut 1 and Flange Cut 1 sections. This is to project the bucket points at the neutral fiber to the two section cuts in CATIA, extract the coordinates for these new points using PointUtility, and finally input these point coordinates into CoreSamplingAutomation, which will use these coordinates and the CATIA model to output part thicknesses. These Web and Flange thicknesses will be used in the calculation of the SOR. FIG. 14 is an image showing Projecting Bucket Points to Web Cut 1. To project the bucket points at the neutral fiber to Web Cut 1, use the Projection tool (e.g., see the Projection Definition pop-up screen 1416, as in the screen shot depicted in FIG. 14) to project these points to the Sweep surface created at Web Cut 1. Project these along the direction of the Rosette Y axis, as the new points have the same Rosette X coordinate as the original bucket points, so that the thickness extracted correlates well with the location of the overlaps. For the Flange points, first use the Translate tool (e.g., see the Translate Definition pop-up screen 1516, as in the screen shot depicted in FIG. 15) to translate the bucket points along the Rosette Z direction for the distance between the plane of the neutral fiber and the plane of Flange Cut 1. Then, project these translated points (e.g., see the Projection Definition pop-up screen 1616, as in the screen shot depicted in FIG. 16) to the OML surface. Using Flange Cut 1 ensures that the CoreSamplingAutomation utility is able to determine a thickness for all necessary points. If necessary, trim the OML surface to prevent point projections to the Outer Flange. Now that points have been created at Web Cut 1 and Flange Cut 1, use PointUtility to extract the coordinates of these points in the Rosette coordinate systems, just as was done for the overlaps. Extract the web and flange points separately. Modify the output files of PointUtility with the following changes in order to make them compatible with CoreSamplingAutomation (See an example table of outputs in FIG. 17):
   - If Column A is not already a column of names for each point, insert a column, name the column Name, and assign a name (string) for each point.
   - Columns B through D should contain X, Y, and Z coordinate data; title these columns X, Y, and Z (not "X (mm)")
   - Clear any data after column D, and delete the input summary sheet. Finally, run the CoreSamplingAutomation utility to ascertain the part thickness at each point. First, select "Load Model", then Select under Axis System and select the Rosette coordinate system in CATIA, then Open Excel and select one of the Excel files containing bucket point at section data. Keep "Include Non-Structural Plies?" unchecked, and set the Max Vector Length to a value large enough to fully intersect the part. Check "Create core sample points" to ensure that the expected points are run, as a poorly formatted Excel input can cause the tool to misinterpret point XYZ data. Then, execute core sampling. This will create a new Excel file in the same directory as the input Excel file containing thickness data for each point. Run this tool for both the web and flange points.
7. Lastly, use the point data to create histogram charts. It is convenient to copy all of the overlap location data worksheets into a single workbook. On another sheet, copy in the bucket point X locations into a column, and sort them from minimum to maximum. This will be used for the X axis of the histograms. The area between a bucket point and the point listed in the row above it on the sheet (i.e. lower in X location) forms a bucket. In the next two columns, input the thickness data for each bucket, making sure to correlate the correct thickness with the correct bucket point (X coordinate should match exactly). If a new overlap count/SOR assessment is being driven by a manufacturing iteration without any change to the part geometry, ensure that the bucket thicknesses remain unchanged. In the next column, use a formula to count the number of overlaps in a given bucket for a given cut. An example of such a formula would be:
   =COUNTIFS([Set of overlap X coords], "<="&[Bucket point X coord on same row], [Set of overlap X coords], ">"&[Bucket point X coord on previous row]) This is the overlap count that will be used on the Y axis of the Overlap QTY histogram. In the next column, divide each overlap count by the thickness corresponding to each bucket. This is the SOR that will be used on the Y axis of the SOR histogram. Repeat these steps to create additional pairs of columns for each cut. Lastly, create the histogram charts by creating column charts in Excel, using the bucket point X coordinate data as the horizontal axis data and using the overlap count or SOR for a given cut as the series data, as depicted in the example histogram chart in FIG. 18. Overlap QTY and SOR histograms for four cuts will result in eight histogram charts in total.

This example presents the inputs and processes required to generate Overlap QTY and SOR histograms for composite parts for the purpose of predicting whether a proposed NC program will result in reduced part strength compared to another part due to a concentration of ply overlaps.

### ADDITIONAL CONSIDERATIONS

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processor may comprise dedicated circuitry or logic that is permanently configured, such as an application-specific integrated circuit (ASIC), or indefinitely configured, such as an FPGA, to perform certain operations. The processor may also comprise programmable logic or circuitry (e.g., as encompassed within a general-purpose processor or other programmable processor) that is temporarily configured by software to perform certain operations. It will be appreciated that the decision to implement the processor as special purpose, in dedicated and permanently configured circuitry, or as general purpose (e.g., configured by software) may be driven by cost and time considerations.

Accordingly, the term "processor" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processor is temporarily configured (e.g., programmed), each of the processing elements need not be configured or instantiated at any one instance in time. For example, where the processor comprises a general-purpose processor configured using software, the general-purpose processor may be configured as respective different processing elements at different times. Software may accordingly configure the processor to constitute a particular hardware configuration at one instance of time and to constitute a different hardware configuration at a different instance of time.

Computer hardware components, such as communication elements, memory or memory elements, processors, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory or memory device to which it is communicatively coupled. A further computer hardware component may then, at a later time, access the memory to retrieve and process the stored output. Computer hardware components may also initiate communications with input or output devices, and may operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processing element-implemented modules that operate to perform one or more operations or functions. The modules referred to herein may, in some example embodiments, comprise processing element-implemented modules.

Similarly, the methods or routines described herein may be at least partially processing element-implemented. For example, at least some of the operations of a method may be performed by one or more processors or processing element-implemented hardware modules. The performance of certain of the operations may be distributed among the one or more processing elements or processors, not only residing within a single machine, but deployed across a number of machines. In some example embodiments, the processor or processing elements may be located in a single location (e.g., within a home environment, an office environment or as a server farm), while in other embodiments the processor or at least some of its processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processor and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed, and substitutions made herein, without departing from the scope of the technology as recited in the claims.

## Claims

1. A method for forming a composite part, the method comprising:
rendering a layup model for placing a plurality of plies in an automated fiber placement (AFP) process, the layup model comprising a plurality of substantially equidistant sections along a length of the layup model, the plurality of plies being arranged such that each of the substantially equidistant sections has a specific overlap ratio (SOR) within a predetermined range; and
placing, via the automated fiber placement (AFP) process, the plurality of plies according to the layup model to thereby form the composite part.

2. The method of claim 1, wherein the pre-determined range comprises SOR values less than 2.0, or wherein the pre-determined range comprises SOR values of 1.2 to 1.9.

3. The method of claim 1 or 2, wherein the pre-determined range comprises SOR values within +/- 50% of a mean of the SOR for all of the substantially equidistant sections.

4. The method of any preceding claim, wherein the plurality of plies comprises two or more plies having different orientations.

5. The method of any preceding claim, wherein the two or more plies have orientations that differ by less than 90°.

6. The method of claim 5, wherein the two or more plies have orientations that differ by about 15° to about 45°.

7. A method for forming a composite part, the method comprising:
(a) providing a layup model of the composite part for placing a plurality of plies in an automated fiber placement (AFP) process;
(b) designating a plurality of points along a length of the layup model, the plurality of points defining a plurality of substantially equidistant sections therebetween;
(c) identifying a quantity of overlaps formed by the plurality of plies within each of the plurality of substantially equidistant sections;
(d) calculating a specific overlap ratio (SOR) within each of the plurality of substantially equidistant sections by dividing the quantity of overlaps within each section by the nominal through-thickness of the composite part within the corresponding section;
(e) modifying the layup model and repeating steps (b)-(d) until each of the plurality of sections has a SOR within a pre-determined range, thereby producing a production model; and
(f) placing, via the automated fiber placement (AFP) process, the plurality of plies according to the production model to thereby form the composite part.

8. The method of claim 7, wherein the identifying (c) comprises generating one or more planes perpendicular to a surface of the layup model and quantifying intersections of the one or more planes and the plurality of plies.

9. The method of claim 7 or 8, wherein the modifying (e) comprises changing one or more of tow spacing, course spacing, quantity of tows in a given course, course steering, overlap distance, and/or translating the position of a sequence.

10. The method of any one of claims 7 to 9, wherein the pre-determined range comprises SOR values less than 2.0; and/or wherein the pre-determined range comprises SOR values within +/- 50% of a mean of the SOR for all of the substantially equidistant sections.

11. The method of any one of claims 7 to 10, wherein the plurality of plies comprises two or more plies having different orientations, optionally wherein the two or more plies have orientations that differ by less than 90°.

12. A system for forming a composite part, the system comprising:
a control system configured to render a layup model for placing a plurality of plies, the layup model comprising a plurality of substantially equidistant sections along a length of the layup model, the plurality of plies being arranged such that each of the substantially equidistant sections has a specific overlap ratio (SOR) within a pre-determined range; and
an automated fiber placement (AFP) system configured to place the plurality of plies according to the layup model to thereby form the composite part.

13. The system of claim 12, wherein the pre-determined range comprises SOR values less than 2.0.

14. The system of claim 12 or 13, wherein the pre-determined range comprises SOR values within +/- 50% of a mean of the SOR for all of the sections.

15. The system of claim 14, wherein the plurality of plies comprises two or more plies having different orientations; optionally wherein the two or more plies have orientations that differ by less than 90°.
